# EUROPÄISCHE PATENTSCHRIFT

(11) **EP 2 313 024 B1**
(45) Veröffentlichungstag und Bekanntmachung des Hinweises auf die Patenterteilung: **11.09.2019**
(21) Anmeldenummer: 09800047.4
(22) Anmeldetag: 21.07.2009
(51) Int. Cl.: A61C 13/20, A61C 13/083, C04B 35/16, C04B 35/22

(54) **PORÖSER SILIKAT-KERAMISCHER KÖRPER, DENTALRESTAURATION SOWIE VERFAHREN ZUR DESSEN HERSTELLUNG**
POROUS SILICATE-CERAMIC BODY, DENTAL RESTORATION AND PRODUCTION METHOD THEREOF
CORPS POREUX EN SILICATE-CÉRAMIQUE, RESTAURATION DENTAIRE ET SON PROCÉDÉ DE FABRICATION

(30) Priorität: 21.07.2008 EP 08160834; 28.10.2008 WO PCT/EP2008/064602; 31.03.2009 EP 09156921
(43) Veröffentlichungstag der Anmeldung: 27.04.2011
(60) Teilanmeldung: 19184766.4
(73) Patentinhaber: Vita Zahnfabrik H. Rauter GmbH & Co. KG, 79713 Bad Säckingen (DE)
(72) Erfinder: THIEL, Norbert, 79713 Bad Säckingen (DE); DORN, Michael, 72393 Burladingen (DE); BIBUS, Joachim, 79713 Bad Säckingen (DE); GESKE, Vilma, 79650 Schopfheim (DE); THOLEY, Michael, 79713 Bad Säckingen (DE); BOJEMÜLLER, Enno, 79713 Bad Säckingen (DE); HUBER, Birgit, 79713 Bad Säckingen (DE)
(74) Vertreter: dompatent von Kreisler Selting Werner - Partnerschaft von Patent- und Rechtsanwälten mbB
(86) Internationale Anmeldenummer: PCT/EP2009/059359
(87) Internationale Veröffentlichungsnummer: WO 2010/010087

(56) Entgegenhaltungen:
- US-A- 6 126 732
- US-A1- 2004 121 894

## Beschreibung

Die vorliegende Erfindung betrifft einen porösen silikat-keramischen Körper, eine Dentalrestaurationsvorstufe, eine Dentalrestauration, ein Verfahren zur Herstellung eines porösen silikat-keramischen Körpers, ein Verfahren zur Herstellung einer Dentalrestauration sowie die Verwendung des erfindungsgemäßen porösen silikat-keramischen Körpers.

In der Dentalindustrie wird im Allgemeinen im CAD/CAM-Bereich zwischen zwei unterschiedlichen Anwendungsgruppen für Formkörper wie Blöcke, Scheiben, etc., unterschieden: Keramiken für Gerüststrukturen, die verblendet werden, und Keramiken bzw. Glaskeramiken für die sogenannte Chairside-Anwendung, d.h. Blöcke, aus denen der Zahnarzt in einer Sitzung mit dem Patienten für denselben eine Restauration schleifen kann, die nach der Fertigstellung und Individualisierung dem Patienten in der gleichen Sitzung eingesetzt werden kann. Die Gerüstmaterialien sind dichte oder poröse Keramikblöcke, wobei die Gerüste aus den porösen Keramiken durch einen Sinter- oder Glasinfiltrationsprozess ihre endgültige Form und Festigkeit erhalten. Die Keramiken für die Chairside-Anwendung sind dichte Keramik- oder Glaskeramikblöcke, die nach einem Schleif- oder Fräsprozess lediglich mechanisch nachgearbeitet (poliert) werden müssen oder zum Erreichen der endgültigen Festigkeit (Kristallisationsbrand) oder Oberflächenbeschaffenheit (ein sogenannter Glanzbrand) noch einen kurzen Brennprozess durchlaufen.

In der US-A-5106303 wird ein poröser Block beschrieben, aus dem mittels Schleifen oder Fräsen eine Restauration, z.B. ein Veneer, hergestellt werden kann. Der beschriebene Block besteht aus Oxidkeramiken wie z.B. stabilisiertem ZrO₂ oder Al₂O₃. Die Restauration wird mit einem Vergrößerungsfaktor, der nicht genauer beschrieben ist, aus dem porösen Block geschliffen und anschließend dicht gesintert. Nachteilig ist unter anderem auch, dass im Anschluss die Restauration verblendet werden muss.

Die US-A-5775912 beschreibt die Herstellung einer Restauration aus einem porösen Block aus Feldspat- bzw. Verblendkeramik-Material mittels CAD/CAM-Technik. Die theoretische Dichte des Blockes beträgt weniger als 85 % der Dichte nach dem dicht-Sintern. Der Nachteil des beschriebenen Verfahrens jedoch ist, dass kein Vergrößerungsfaktor in den Schleifprozess integriert ist und das Material nach dem dicht-Sintern noch verblendet werden muss. Darüber hinaus wird beschrieben, dass die poröse Struktur beim dicht-Sintern durch ein feuerfestes, hochtemperaturstabiles Material gestützt werden muss.

Die US-B-6354836 beschreibt einen porösen Block, aus dem eine gewünschte Restauration endkonturnah vergrößert geschliffen werden kann und anschließend dicht gesintert werden muss. Der Block besteht aus ZrO₂, Al₂O₃, allgemein Oxidkeramik oder Glaskeramik. Der Nachteil des beschriebenen Verfahrens ist, dass der Block eine isotrope Schwindung aufweist, d.h. in alle drei Raumrichtungen gleich schwindet beim Sintern. Zudem müssen die Oxidkeramiken im Allgemeinen, im Fall von ZrO₂ und Al₂O₃ noch verblendet werden.

Die US-A-6106747 beschreibt ein Verfahren zur Unterstützung von porösen Strukturen beim dicht-Sintern. Hierbei wird eine Stütz-Struktur hergestellt, bevorzugt aus dem gleichen Material wie die poröse und zu sinternde Restauration, die den gleichen Schrumpf beim Sintern aufweist. Die poröse Restauration wird beim Sintern auf dieser Struktur gelagert. Die poröse Struktur kann aus Blöcken, Oxidkeramikblöcken, geschliffen worden sein oder aus durch Suspension bzw. Schlicker aufgetragene Materialien, wie Oxidkeramiken zur Glasinfiltration oder Feldspatmaterialien, bestehen. Der Nachteil dieses Verfahren ist, dass nach dem dicht-Sintern die Überreste der Stützstruktur entfernt werden müssen und dass die Oberflächen der Restauration hierbei angegriffen werden können. Vorteilhafter ist daher ein Material zum dicht-Sintern, dass keine formstabilisierende Unterstützung benötigt.

US 6 126 732 A offenbart einen porösen silikat-keramischen Körper.

Der Vorteil der Keramiken für den Chair-Side-Prozess ist die schnelle Versorgung des Patienten mit einer ästhetisch anspruchsvollen Krone. Der Nachteil liegt in der Bearbeitung. Da diese Materialien sehr fest, weil dicht, d. h. kaum oder nicht porös sind, ist der Schleifprozess mit einem erheblichen Zeitaufwand verbunden. Darüber hinaus nutzen sich die Schleifgeräte oder Fräsen durch die relativ hohe Härte sehr schnell ab und es besteht die Gefahr von kleinen Ausbrüchen/Abbrüchen, auch Chipping genannt, besonders in dünnen Randbereichen der Restauration.

Für die Nacharbeit der Restaurationsoberfläche, d.h. beim Entfernen der Schleifspuren und beim Polieren der Oberflächen, damit ein zahnähnlicher Glanz erreicht wird, ist ebenfalls ein erheblicher Zeitaufwand notwendig und die Instrumente zur Politur sind ebenfalls einem starkem Verschleiß ausgesetzt.

Ein der Erfindung zu Grunde liegendes technisches Problem ist mithin die Schaffung eines Körpers, der die genannten Nachteile vermeidet. Ein weiteres technisches Problem besteht in der Bereitstellung eines Verfahrens zur Herstellung des Körpers.

Gelöst wird ein der Erfindung zugrunde liegendes technische Problem durch einen porösen silikat-keramischen Körper nach Anspruch 1. Bevorzugte Ausführungsbeispiele sind in den Unteransprüchen definiert.

Definiert wird die gewünschte Dichte des porösen Formkörpers durch den Werkstoff bzw. das Material (Chemismus) und die Schleif- bzw. Fräsparameter der zu verwendeten Maschine (physikalische Parameter). Abhängig vom Schleif- bzw. Frässystem muss der Formkörper auf einen bestimmten Dichtebereich eingestellt werden, um eine schadensfreie Bearbeitung zu gewährleisten. Das Erreichen der Blockdichte wird über die Sinterzeit und die Sintertemperatur gesteuert.

Allgemein gilt, dass eine Erniedrigung der Sintertemperatur eine Verlängerung der Sinterzeit bzw. eine Erhöhung der Sintertemperatur die Verringerung der Sinterzeit bewirkt.

Die poröse Struktur des silikat-keramischen Körpers ermöglicht ein schnelleres und das Werkzeug zur Materialabtragung schonenderes Schleifen oder Fräsen. Durch die leichtere Bearbeitbarkeit können Ausbrüche von Material aus der Restauration verhindert werden. Darüber hinaus können durch einen nach dem Schleifen stattfindenden Sinterschritt die Oberflächen geglättet werden, d.h. eventuelle Schleifspuren werden größtenteils oder gänzlich entfernt. Ein arbeitsaufwendiges Polieren der dichten Oberflächen kann entfallen, eine Politur bzw. ein Glätten der Oberfläche im porösen Zustand ist aber möglich. Außerdem kann durch den Sinterschritt der zuvor erwähnte Brand zur Oberflächenveredelung, der sogenannte Glanzbrand entfallen.

Ein weiterer Vorteil des erfindungsgemäßen porösen silikat-keramischen Körpers kann darin gesehen werden, dass aus dem Körper formbare Gegenstände als Verblendmaterialien (im Folgenden auch Verblendschalen genannt) in der Dentaltechnik zur Herstellung von Zahnersatz eingesetzt werden können. Dabei ist es für den Fachmann einsichtig, den Wärmeausdehnungskoeffizient (WAK) des porösen silikat-keramischen Körpers insbesondere auf die Verwendung als Verblendmaterial für ein Gerüst abzustimmen. Der WAK, gemessen nach ISO 6872, sollte dabei z. B. mindestens 7 x 10⁻⁶ 1/K, insbesondere 7 bis 18 x 10⁻⁶ 1/K betragen.

Ist das zu verblendende Gerüst aus Metall, beispielsweise aus einer Goldlegierung oder aus NEM (Nicht-Edel-Metall) sollte der WAK des erfindungsgemäßen porösen silikat-keramischen Körpers gemessen nach ISO 6872, typischerweise zwischen 7 bis 16 x 10⁻⁶ 1/K, insbesondere 12 bis 15 x 10 E⁻⁶ 1/K betragen.

Für Verblendkeramiken verwendbare Metalllegierungen und deren WAK-Werte werden im Allgemeinen von den Verblendkeramikherstellern veröffentlicht und sind dem Fachmann bekannt. Vorzugsweise wird der WAK der Dentalkeramik geringer, z, B. 0,5 bis mehrere Einheiten gewählt als diejenige des Gerüstwerkstoffes, um eine Druckspannung in der Restauration aufzubauen.

Der erfindungsgemäße poröse silikat-keramische Körper kann auch auf Keramikgerüste zur Verblendung aufgebracht werden. Dabei empfiehlt es sich den WAK des Körpers, gemessen nach ISO 6872, zwischen 7 bis 11 x 10⁻⁶ 1/K zu wählen, sofern der WAK des Gerüstmaterials in diesem Bereich liegt.

| Gerüstkeramik | WAK [10⁻⁶×K⁻¹] |
|---|---|
| Y-TZP (ZrO₂) | ∼ 9 |
| Al₂O₃ | ∼ 7 |
| In-Ceram Alumina | ∼ 7 |
| In-Ceram Zirconia | ∼ 7 |
| In-Ceram Spinell | ∼ 7 |

Die drei letztgenannten Materialien in der Tabelle sind Glasinfiltrationskeramiken.

In den meisten Fällen kann es angezeigt sein, die Farbgebung des erfindungsgemäßen porösen silikat-keramischen Körpers so zu wählen, dass sich eine möglichst natürliche Anmutung der Verblendung und damit das Ergebnis einer Dentalrestauration ergibt. Hierzu kann der Block aus z.B. Schichten unterschiedlicher Transluzenzen und/oder Farben aufgebaut sein. Eine weitere Möglichkeit ist das Einbringen einer dreidimensionalen Struktur, wie sie in der Anmeldung PCT/EP2008/064602 beschrieben wird, die eine weitestgehend naturgetreue Nachbildung des Schmelzverlaufes des menschlichen Zahnes ermöglicht. Der Gegenstand dieser Anmeldung ist ausdrücklich Teil der Offenbarung dieser Erfindung.

Diese Patentanmeldung offenbart einen Formkörper aus formstabilisiertem Material, das mindestens einen ersten Bestandteil und einen zweiten Bestandteil aufweist, dadurch gekennzeichnet, dass der zweite Bestandteil eine andere Färbung als der erste Bestandteil aufweist und der zweite Bestandteil in dem ersten Bestandteil, unter Ausbildung einer Grenzfläche so angeordnet ist, dass die Grenzfläche eine räumlich gekrümmte Fläche darstellt.

Der Formkörper ist in einer Ausführungsform so ausgebildet, dass die Grenzfläche zumindest teilweise dem Verlauf der Dentin/Schmelzgrenze natürlicher oder künstlicher Zähne entspricht. Dabei werden die Färbungen des ersten Bestandteils und zweiten Bestandteils so gewählt, dass sie der Schmelz- bzw. Dentinfärbung eines natürlichen Zahns oder Kunstzahns möglichst nahe kommen. Dadurch wird es möglich, eine Vielzahl von Verläufen der Dentin/Schmelzgrenzen von Zähnen in dem Formkörper vorzusehen, so dass eine individuelle Anpassung der Grenzverläufe in einer anzufertigenden Zahnrestauration erfolgen kann.

Der Formkörper kann durch verschiedene Maßnahmen in seiner Form stabilisiert werden. Insbesondere kann dies durch mechanische Einwirkung, insbesondere durch Druck, typischerweise im Bereich von 5-500 MPa, zum Beispiel Pressen, bewerkstelligt werden. Weitere Formgebungsverfahren sind dem Fachmann bekannt. Zudem können aufbauende Verfahren, z.B. Injection Moulding, zur Herstellung verwendet werden.

Die Färbung der Bestandteile des erfindungsgemäßen Formkörpers kann durch Pigmentierung, im einfachsten Fall mittels Farbpigmenten erfolgen, die auch gleichzeitig der Einstellung einer Transluzenz dienen kann. Die Transluzenz kann auch durch Trübungsmittel eingestellt werden.

Für den Einsatz des erfindungsgemäßen Formkörpers in der Dentaltechnik eignen sich insbesondere solche Formkörper, deren erster und zweiter Bestandteil eine Keramik, insbesondere eine Feldspat- oder Oxidkeramik ist. Es ist aber genau so möglich ein Kunststoffmaterial einzusetzen. Der Kunststoff kann ein thermoplastischer Kunststoff oder duroplastischer Kunststoff sein. Insbesondere geeignet ist ein Kunststoff auf Acrylatbasis. Geeignete Kunststoffe sind dem Fachmann bekannt und sind typischerweise solche, die bei der Herstellung von Kunstzähnen Verwendung finden.

Es kommen auch erste und zweite Bestandteile aus einer Feldspatkeramik in Betracht, die Metalloxide umfasst, die ausgewählt sind aus der Gruppe bestehend aus SiO₂, Al₂O₃, Na₂O, K₂O, gegebenenfalls ergänzt durch Zugabe von Pigmenten und anorganischen Füllstoffen.

In einer weiteren Ausführungsform können die Bestandteile aus einer Oxidkeramik aufgebaut sein, die Metalloxide umfasst, die ausgewählt sind aus der Gruppe bestehend aus SiO₂, Al₂O₃, ZrO₂, stabilisiert durch verschiedene Verbindungen (Y₂O₃, CeO₂, etc.), gegebenenfalls ergänzt durch Zugabe von Pigmenten bzw. Verbindungen färbender Ionen.

In einer anderen Ausführungsform der Erfindung enthält der erfindungsgemäße Formkörper einen Binder zur Verbesserung der Formstabilität insbesondere des sinterfähigen Materials. Ein einsetzbarer Binder ist zum Beispiel ausgewählt aus der Gruppe bestehend aus Acrylat (-en), Polyvinylalkohol (PVA), Polyvinylacetat (PVAC), Polysaccharid/Acrylsäure (PS/AC), Cellulosederivate oder Mischungen davon. Zusätzliche Hilfsstoffe wie Wasser, Schmiermittel zur Erniedrigung der Reibung, Sinterhilfsmittel zur Beschleunigung der Verdichtung oder Dispergiermittel, Plastifizierer, Benetzungsmittel und Thermoplaste zur Beeinflussung der rheologischen Eigenschaften können zugegeben werden.

Die Grenzfläche zwischen dem ersten und zweiten Bestandteil des Formkörpers, d.h. insbesondere die Grenzfläche zwischen dem das Dentin bzw. den Schmelz eines Zahnes nachbildenden Materials ist in besonders bevorzugter Ausführungsform im Wesentlichen durch eine Parabelschar beschrieben. Zueinander parallele Querschnittsebenen durch den Formkörper können derart in den Formkörper gelegt werden, dass die Grenze zwischen den beiden Bestandteilen als parabelförmige Grenzlinie erscheint. Hierbei ist die Grenzlinie zumindest über 2/3, insbesondere 3/4, ihrer Länge parabelförmig. Insbesondere die Ränder bzw. Enden der Grenzlinie können eine von einer Parabel abweichende Form aufweisen, wobei auch dieser Bereich der Grenzlinie vorzugsweise keinen Sprung oder keine Stufe aufweist. Insbesondere wird die parabelförmige Grenzlinie in den Randbereichen flacher und ist vorzugsweise nach außen gerichtet.

Über eine Breite des Formkörpers, die sich senkrecht zu den parallelen Querschnittsebenen erstreckt, weisen mindestens 70% der Querschnittsebenen, insbesondere mindestens 80% der Querschnittsebenen eine parabelförmige Grenzlinie, wie vorstehend definiert auf.

Bei einer Ausrichtung der Formkörper, bei der der zweite Bestandteil, d.h. insbesondere, das das Dentin nachbildendende Material im unteren Bereich des Formkörpers angeordnet ist, sind die die Grenzlinien ausbildenden Parabeln nach unten offen. Hierdurch werden Maxima ausgebildet, wobei in bevorzugter Ausführungsform die Parabeln bezüglich einer durch die Maxima verlaufenden Ebene spiegelsymmetrisch sind. Bei dieser Anordnung des Formkörpers mit nach unten weisendem Dentin, kann somit in bevorzugter Ausführungsform eine Symmetrieebene durch sämtliche Maxima der Parabeln gelegt werden.

In bevorzugter Ausführungsform kann eine Haupt-Querschnittsebene definiert werden, bei der es sich in der Lage des Formkörpers mit nach unten weisenden Dentin um diejenige Querschnittsebene handelt, in der die parabelförmige Grenzlinie das größte bzw. höchste Maximum aufweist. Ausgehend von der Haupt-Querschnittsebene in eine Verjüngungsrichtung nimmt die Höhe der Grenzlinie vorzugsweise stetig ab. Insbesondere eine durch die Maxima definierte Kurve nimmt zumindest über einen Großteil ihrer Länge von insbesondere mehr als die Hälfte und vorzugsweise mehr als 3/4 ihrer Länge stetig ab. Die Verbindungskurve der Maxima liegt vorzugsweise in der Symmetrieebene und/oder ist senkrecht zur Haupt-Querschnittsebene ausgerichtet. Bezogen auf die Breite des zweiten Bestandteils in Verjüngungsrichtung erfolgt die Abnahme der Parabelmaxima vorzugsweise über mindestens 50%, besonders bevorzugt über mindestens 75% der Gesamtlänge bzw. Gesamtbreite des zweiten Bestandteils.

Vorzugsweise gehen beide Enden der Grenzlinie bzw. beide Enden der Parabel-Äste in eine Kurve entgegengesetzter Krümmung über. An den parabelförmigen Teil der Grenzlinie schließt sich somit in bevorzugter Ausführungsform eine nach außen gekrümmte Kurve an, so dass ein Wendepunkt ausgebildet ist.

Die vorstehend beschriebene besonders bevorzugte Ausführungsform der Grenzfläche zwischen dem ersten Bestandteil, der insbesondere den Schmelz nachbildet und dem zweiten Bestandteil, der insbesondere das Dentin nachbildet, kann geringe Abweichungen aufweisen. Es handelt sich hierbei um eine geometrische Annäherung, so dass Abweichungen von bis zu 10% möglich sind. Insbesondere erfolgt die Ausgestaltung der Grenzlinie anhand von Erfahrungswerten sowie anhand von Untersuchungen der Schmelz-Dentin-Grenze bei natürlichen und/ oder künstlichen Zähnen.

Zur Herstellung eines künstlichen Zahnes ist der Formkörper vorzugsweise über eine geeignete Computersoftware darstellbar und insbesondere im Raum frei drehbar. Ein Zahnarzt oder Zahntechniker kann somit die Grenzfläche aus unterschiedlichen Blickwinkeln betrachten. Beispielsweise über Bildverarbeitungsprogramme werden dem Rechner die geometrischen Abmessungen des nachzubildenden Zahnes übermittelt. Der Zahnarzt oder Zahntechniker kann den hierdurch erzeugten virtuellen Zahn beliebig in dem Formkörper anordnen und hierdurch die Grenzfläche zwischen Dentin und Zahnschmelz derart anordnen, dass der später aus dem Formkörper hergestellte Zahn im Erscheinungsbild bzw. der Anmutung den natürlichen Zähnen des Patienten, insbesondere den benachbarten Zähnen des Patienten entspricht oder zumindest sehr ähnlich ist.

Zur Herstellung des erfindungsgemäßen Formkörpers aus sinterfähigem Material der mindestens einen ersten und mindestens einen zweiten Bestandteil aufweist, kann das erfindungsgemäße Verfahren dienen, bei dem
a) der mindestens erste Bestandteil in eine Form eingefüllt wird,
b) in den eingefüllten mindestens ersten Bestandteil des sinterfähigen Materials eine Mulde mit einer Oberfläche eingepresst und
c) die Oberfläche eine räumlich gekrümmte Grenzfläche mit dem
d) in die Mulde eingefüllten mindestens zweiten Bestandteils bildet.

Die Oberfläche der Grenzfläche ist so gestaltet, dass sie zumindest teilweise dem Verlauf der Dentin/Schmelzgrenze natürlicher oder künstlicher Zähne entspricht.

Die Herstellung des Formkörpers kann auch durch keramisches Spritzgießen o.ä. Herstellungsverfahren erfolgen.

Die Konstruktion der Grenzfläche erfolgt gemäß einer Ausführungsform der Erfindung durch Positionierung der Schmelz-Dentin-Grenzflächen unterschiedlicher natürlicher und/oder künstlicher Zähne. Zur Charakterisierung der Lage der Grenzfläche von Schmelz und Dentin kann bei natürlichen Zähnen der Schmelz präparativ vorsichtig abgetragen werden. Dabei ist darauf zu achten, dass die Dentinschicht nicht abgetragen wird. Einfacher ist die Herstellung von künstlichen Zähnen und deren Grenzschichtverlauf. Der Grenzschichtverlauf bei künstlichen Zähnen ist dem Verlauf der natürlichen Zähne nachempfunden. Um Körper, die den Grenzschichtverlauf aufweisen, herzustellen, werden die Zähne nicht mit allen Schichten hergestellt, sondern die transluzentere Schmelzschicht wird nicht aufgetragen. Nach dem Sinterprozess erhält man so eine Oberfläche des künstlichen Zahns, die dem Grenzverlauf Schmelz zu Dentin entspricht.

Durch Präparation verschiedener Zähne kann man durch die Anordnung der verschiedenen Dentin-Schmelz-Grenzflächen im Raum, vorzugweise durch größenabhängige Anordnung, eine gekrümmte Fläche modellieren, die dem Grenzflächenverlauf der verschiedenen Zähne entspricht. Aus diesem Modell kann ein Werkzeug hergestellt werden.

Eine alternative Möglichkeit der Grenzflächenmodellierung ist, Schmelz-Dentin-Verläufe zu digitalisieren und die Modellierung über eine Software zu generieren. Dies bietet die Möglichkeit, eine wesentlich größere Zahl an Grenzverläufen in die Generierung der Grenzfläche einfließen zu lassen. Zudem kann ein Werkzeug mittels CAD-CAM-Verfahren dann einfacher hergestellt werden.

Mit Hilfe des Werkzeuges lässt sich ein gewünschter Formkörper herstellen. Um eine dreidimensionale Vermessung des Formkörpers bzw. des Grenzflächenverlaufes vorzunehmen, wird ein Formkörper in eine möglichst große Anzahl an planparallelen Scheiben gesägt und die Scheiben werden beidseitig glatt geschliffen. Dabei wird vor dem Zersägen senkrecht zur Sägerichtung eine durchgehende Markierung an dem Formkörper angebracht, vorzugsweise eine Nut, die diagonale Ecken des Formkörpers verbindet, die eine eindeutige Lagebestimmung einer Scheibe durch Vermessen der Position Nut an der Seite der Scheibe ermöglicht.

Durch das Vermessen der Lage der Grenzfläche auf den Scheiben lässt sich in einem Koordinatensystem eine Punktwolke erstellen, die die Grenzfläche Schmelz-Dentin darstellt.

Das dort beschriebene Verfahren kann als Zwischenschritt einen Sinterschritt beinhalten. Dies hat den Vorteil, dass der Formkörper stabiler ist.

Der erfindungsgemäße Formkörper kann auch durch entsprechend ausgeführte Biskuitierung- oder Schlickerverfahren wie beispielsweise Schlickerdruckguss hergestellt werden.

Der Herstellprozess mit Hilfe von Schlickerdruckguss kann beispielsweise folgendermaßen durchgeführt werden:
a.) Herstellung eines Formteils A mit der Geometrie der Oberfläche aus dem o.g. Herstellprozess durch Eingießen eines Schlickers in bspw. eine poröse Gipsform, deren Oberfläche der beschriebenen Grenze entspricht unter Anwendung von Druck oder ohne Druck
b.) Herstellung eines zweiten Formteils B mit Negativkontur gegenüber Formteil A gemäß a.)
c.) Fügen der beiden Formteile A und B zu einer Gesamteinheit C mit möglicher thermischer Nachbehandlung mit oder ohne Druck innerhalb oder außerhalb einer Form (nach Entformung), welche die Gesamtaußenform der Gesamteinheit C bestimmt (Oberfläche des gefügten Bauteils/Gesamteinheit)

Oder:
a.) Herstellung eines Formteils A mit der Geometrie der Oberfläche aus dem o.g. Herstellprozess durch Eingießen eines Schlickers in bspw. eine poröse Gipsform, deren Oberfläche der beschriebenen Grenze entspricht unter Anwendung von Druck oder ohne Druck
b.) Entformung des Formteils A und Positionierung des Formteils A in einer weiteren Gipsform, die der Endkontur der Gesamteinheit entsprechen soll.
c.) Auffüllen der Form mit einem weiteren Schlicker unter Anwendung von Druck oder ohne Druck und möglicher thermischer Nachbehandlung innerhalb der Form oder nach Entformung.

Der Herstellprozess mit Hilfe von Bisquitierung kann folgendermaßen durchgeführt werden:
a.) Herstellung eines Formteils A mit der Geometrie der Oberfläche aus dem o.g. Herstellprozesses durch Einlegen einer plastifizierten Masse mit oder ohne Binderzusätzen in eine entsprechende Form und möglicher thermischer Stabilisierung mit oder ohne Druck
b.) Herstellung eines zweiten Formteils B mit Negativkontur gegenüber Formteil A gemäß a.)
c.) Fügen der beiden Formteile A und B zu einer Gesamteinheit C mit möglicher thermischer Nachbehandlung mit oder ohne Druck innerhalb oder außerhalb einer Form, welche die Gesamtaußenform der Gesamteinheit C bestimmt (Oberfläche des gefügten Bauteils/Gesamteinheit).

Die beschriebenen Herstellverfahren sind in der Keramikformgebung prinzipiell schon lange bekannt (Hülsenberg, Keramikformgebung, ISBN 3-342-00098-8)

Der Formkörper kann zur Herstellung einer Dentalrestauration eingesetzt werden, die insbesondere durch CAD/CAM-Methoden konstruiert und hergestellt wird.

Gegenstand der Erfindung ist auch ein Verfahren zur Herstellung eines Formkörpers aus formstabilisiertem Material mit einer im Formkörper verlaufenden Grenzfläche, wobei das Material mindestens einen ersten Bestandteil und einen zweiten Bestandteil aufweist,
der zweite Bestandteil eine andere Pigmentierung als der erste Bestandteil aufweist und der zweite Bestandteil in dem ersten Bestandteil unter Ausbildung einer Grenzfläche so angeordnet ist, dass die Grenzfläche eine räumlich gekrümmte Fläche darstellt,
die Grenzfläche erhältlich ist, indem Flächen, die Krümmungsradien mit unterschiedlichen Krümmungsgraden besitzen, aus Schnitten, die durch ein Ensemble natürlicher oder künstlicher Zähne geführt sind, geschaffen werden und/ oder
die Grenzfläche erhältlich ist, indem Flächen, die Krümmungsradien mit unterschiedlichen Krümmungsgraden besitzen, aus Verläufen der Dentin-Schmelzgrenze natürlicher oder künstlicher Zähne des Ensembles geschaffen werden,
die geschaffenen Flächen mit Krümmungsradien mit unterschiedlichen Krümmungsgraden, in Abhängigkeit des Krümmungsgrades der Krümmungsradien räumlich angeordnet werden, und
bei welcher sich durch eine sich dadurch ergebende räumliche Anordnung der geschaffenen Flächen die Gesamtheit der Grenzfläche ergibt.

In einer Ausführungsform des in der internationalen Anmeldung beschriebenen Verfahrens zur Herstellung des erfindungsgemäßen Formkörpers mit Grenzfläche kann beim Anordnen der geschaffenen Flächen der Randbereich der Verläufe der Dentin-Schmelzgrenze unberücksichtigt bleiben.

In einer anderen Ausführungsform kann das Ausbilden der Gesamtheit der Grenzfläche nur Zähne berücksichtigen, deren Dentin-Schmeizgrenze mit einer vorgegebenen Näherungsfläche zumindest 80%, insbesondere zumindest 90% übereinstimmt. Dabei wird insbesondere die Näherungsfläche durch signifikante Dentin-Schmelzgrenzen natürlicher oder künstlicher Zähne angenähert.

In noch einer Ausführungsform des Verfahrens werden die Zähne mit starker Krümmung der Dentin-Schmelzgrenze zur Ausbildung eines Scheitelbereichs der Grenzfläche zusammengefasst, bzw. im Scheitelbereich einer Näherungsfläche angeordnet. Die zur Anordnung im Scheitelbereich ausgewählten Zähne können zum Beispiel im Wesentlichen der Größe nach sortiert werden.

In einer weiteren Ausführungsform des Verfahrens werden die Zähne mit schwacher Krümmung der Dentin-Schmelzgrenze im Randbereich der Grenzfläche zusammengefasst, bzw. im Randbereich einer Näherungsfläche angeordnet. Auch hier können die zur Anordnung im Randbereich ausgewählten Zähne im Wesentlichen der Größe nach sortiert werden.

In einer anderen Ausführungsform des Verfahrens können die Zähne mit mittlerer Krümmung der Dentin-Schmelzgrenze zur Ausbildung eines zwischen dem Randbereich und dem Scheitelbereich angeordnetem Zwischenbereichs der Grenzfläche zusammengefasst, bzw. im Zwischenbereich einer Näherungsfläche angeordnet werden. Die zur Anordnung im Zwischenbereich ausgewählten Zähne können auch hier im Wesentlichen der Größe nach sortiert werden.

Erfindungsgemäß ist es ebenfalls möglich, dass die Größensortierung unabhängig von der Stärke der Krümmung in dieselbe Raumrichtung erfolgt.

Um ein einfaches Bearbeiten des erfindungsgemäßen porösen silikat-keramischen Körpers zu erleichtern, insbesondere durch CAD/CAM Bearbeitungsmethoden, ist der poröse silikat-keramische Körper als Formkörper ausgebildet. Dieser erfindungsgemäße poröse silikat-keramische Körper weist beispielsweise ein Halteelement auf, wie z.B. in DE-A-103 22 762 beschrieben oder wie es heutzutage für die verschiedenen CAD/CAM- und/oder Kopierschleifsysteme in Abhängigkeit vom Hersteller üblich ist. Dabei wird das Halteelement an dem Körper festgeklebt oder aber die Form des Körpers weist bereits herstellungsbedingt ein entsprechendes Halteelement, z.B. eine Nut, auf.

In einer anderen Ausführungsform kann der erfindungsgemäße poröse silikat-keramische Körper als Einbettung in einer Matrix angeordnet werden. Auch dadurch wird insbesondere eine mechanische Bearbeitung in einer CAD/CAM-Maschine und/oder einem Kopierschleifsystem zur Bearbeitung erleichtert oder ermöglicht. Bekannt ist z. B. bereits das Everest®-System der Firma KaVo, Biberach.

Gegenstand der vorliegenden Erfindung ist daher auch eine Dentalrestaurationsvorstufe erhältlich durch Bearbeitung des erfindungsgemäßen porösen silikat-keramischen Körpers.

Durch die Bestimmung des Sinterschrumpfes bzw. des sogenannten Vergrößerungsfaktors (der Vergrößerungsfaktor ist ein Äquivalent zum Schrumpfungsfaktor und gibt den Faktor an, um den ein Werkstück vergrößert aus einem Formkörper geschliffen werden muss, damit das Werkstück nach dem dicht Sintern die gewünschte Größe hat, beide werden im Allgemeinen richtungsabhängig bestimmt), kann aus dem porösen silikat-keramischen Körper eine Dentalrestaurationsvorstufe geschliffen werden. Da die Dentalrestaurationsvorstufe definiert vergrößert aus dem Formkörper geschliffen wurde, erhält die dichte Dentalrestauration die gewünschte Größe und Form.

Ein weiterer Gegenstand der vorliegenden Erfindung ist eine daraus herstellbare Dentalrestauration erhältlich durch dicht Sintern der Dentalrestaurationsvorstufe unter eventueller Berücksichtigung eines Sinterschrumpfes, um die Restauration auf einem präparierten Gegenstand, z.B. Zahnstumpf im Patienten, anzubringen.

Das dicht Sintern der Dentalrestaurationsvorstufe erfolgt z.B. in einem handelsüblichen Ofen zum Verblenden von Dentalrestaurationen. Wie beim Verblenden empfiehlt es sich, dass beim Sintern ein Vakuum anliegt. Dabei ist die Sintertemperatur und Sinterzeit auf das silikat-keramische Material und dessen physikalische Eigenschaften sowie die gewünschten Oberflächeneigenschaften der Dentalrestauration anzupassen.

Erfindungsgemäß herstellbar ist auch eine Dentalrestaurationsvorstufe erhältlich durch Bearbeitung des erfindungsgemäßen porösen silikat-keramischen Körpers und Aufsetzen auf ein komplementäres Gerüst. Diese Dentalrestaurationsvorstufe wird im Folgenden auch als poröse Verblendschale bezeichnet.

Wird der WAK des silikat-keramischen Formkörpers auf den WAK eines Gerüstmaterials abgestimmt, so kann aus dem porösen, silikat-keramischen Formkörper mittels CAD/CAM-Verfahren oder anderer Schleif- oder Fräsverfahren eine Überstruktur geschliffen werden, die auf das Gerüst aufgesetzt wird und anschließend wie zuvor beschrieben auf das Gerüst aufgesintert wird. Dabei dient nicht der Zahnstumpf oder das Modell des Zahnstumpfes als Grundlage für das Schleifen/Fräsen der Struktur aus dem porösen Formkörper, sondern die Oberfläche der Gerüststruktur.

Es ist sinnvoll darauf zu achten, dass das Gerüst an der Oberfläche, auf die die Dentalrestaurationsvorstufe als poröse Verblendschale aufgesetzt wird, keine oder nur sehr geringe unter sich gehende Stellen aufweisen. Diese können beim späteren Aufsetzen der Verblendschale auf das Gerüst aufgrund der sich verjüngenden Durchmesser zu Schwierigkeiten führen. Zudem bilden sich beim dicht Sintern Hohlräume aus, die zu Spannungen und Rissen führen können.

Vorteilhaft ist bei der Konstruktion von Gerüst und Verblendschale die Grenzfläche des Gerüstes derartig zu konstruieren, dass die Verblendschale eindeutig und ohne eine Möglichkeit des unbeabsichtigten Verschiebens auf dem Gerüst platziert werden muss.

Eine weitere Möglichkeit der genauen Platzierung und der Gewährleistung eines möglichst fehlerfreien Verbundes besteht darin, die Verblendschale bei der Konstruktion so zu gestalten, dass die Grenzfläche zwischen Verblendschale und Gerüst kongruent ist, die innere Oberfläche der Verblendschale also passend auf die äußere Oberfläche des Gerüsts und nicht vergrößert geschliffen wird, und die äußere Oberfläche der Verblendschale entsprechend Dichte bzw. unter Berücksichtigung eines Schrumpfungsfaktors vergrößert herausgeschliffen wird. Des weiteren kann die innere Oberfläche der Verblendschale größer als kongruent bis maximal kleiner als die innere Oberfläche der Verblendschale, die sich aus der Berechnung mit dem zuvor gemessenen Vergrößerungsfaktor des Blockes ergibt, ausgeschliffen werden, während die äußere Oberfläche der Verblendschale entsprechend Dichte bzw. unter Berücksichtigung eines entsprechenden Schrumpfungsfaktors vergrößert herausgeschliffen wird. D.h. dass die innere Oberfläche der Restauration mit einem kleineren Vergrößerungsfaktor herausgeschliffen wird, als dem zuvor bestimmten Vergrößerungsfaktor des porösen Blockes, der den maximalen Vergrößerungsfaktor darstellt, mit dem eine Verblendschale noch geschliffen und dicht gesintert werden kann und nach dem Sintern passgenau auf dem Gerüst aufliegt. Abhängig von dem angewendeten Vergrößerungsfaktor der Innenseite wird ein Vergrößerungsfaktor für die Außenseite berechnet, der unter anderem auch auf den berechneten Vergrößerungsfaktor des Blockes basiert, aber den nicht maximalen Vergrößerungsfaktor der Innenseite ebenfalls berücksichtigt.

Falls durch die entsprechende Restauration gefordert, kann gemäß der Erfindung auch eine Dentalrestauration bereitgestellt werden, die erhältlich ist durch dicht Sintern der erfindungsgemäßen Dentalrestaurationsvorstufe. Eventuell unter Berücksichtigung eines Sinterschrumpfes kann diese dann auf einem komplementären Gerüst angeordnet werden.

Die Verbindung zwischen der Verblendschale und dem Gerüst kann durch ein Aufsintern der Verblendschale, Verkleben mit handelsüblichen, dentalen Klebern oder durch die Verwendung eines Lots, vorzugsweise eines Glaslots, wie in der WO-A-2006/120255 A beschrieben, erfolgen.

Gegenstand der vorliegenden Erfindung ist auch ein Verfahren zur Herstellung des erfindungsgemäßen porösen silikat-keramischen Körpers, wobei die Herstellung des Grünlings über prinzipiell bekannte Herstellverfahren mit Pulvern oder Granulaten in der Keramikformgebung (siehe auch Hülsenberg, Keramikformgebung, ISBN 3-342-00098-8) erfolgen kann. Zu diesen gehören zum Beispiel:
- Schlickerdruckguss
- Trockenpressen von Granulat/Granulaten
- Strangpressen oder ähnliches.

Im Gegensatz zu Herstellungsverfahren für glaskeramische, dentale Formkörper gemäß dem Stand der Technik lässt sich das erfindungsgemäße Herstellungsverfahren als Unterbrechung des Sinterprozesses zum vollständigen dicht Sintern auffassen, so dass ein poröser Körper entsteht.

Gegenstand der vorliegenden Erfindung ist auch ein Verfahren zur Herstellung von erfindungsgemäßen Dentalrestaurationen umfassend die folgenden Schritte:
- Bearbeiten des erfindungsgemäßen porösen silikat-keramischen Körpers, gefolgt von
   a) Positionieren der Verblendschale auf einem Gerüst mit anschließendem Sinterbrand oder
   b) dicht Sintern der Restaurationsvorstufe zur endgültigen dentalen Restauration oder
   c) dicht Sintern der Verblendschale mit anschließendem Positionieren und Verbinden (Aufsintern, Kleben, Verwendung eines Glaslots) mit einem Gerüst.

Die Erfindung wird anhand der folgenden den Gegenstand der Erfindung nicht limitierenden Ausführungsbeispiele näher erläutert.

Die für die Versuche verwendete Schleifmaschine war eine Sirona inLab-Maschine. Durch die Wahl der Maschine und deren Schleifparameter waren die Parameter der herzustellenden Formkörper definiert, da mit den vorgegebenen Schleifparametern nur bei definierten Blockparametern ein positives Ergebnis erreicht werden kann.

Grundlage der Probekörper war eine Mischung aus Feldspatkeramiken. Das Feldspat-Granulat wurde in Form gebracht und gepresst. Der daraus erhaltene Formkörper wurde entsprechend den beim Granulat verwendeten Zusätzen von Binder befreit, gemäß Stand der Technik, und anschließend bei einer Temperatur von 1125 °C porös gesintert. Nach der Befreiung vom Binder wurden die Formkörper direkt, d.h. im noch heißen Zustand, oder nach einem Vorwärmen, in einem Ofen mit Vakuum gesintert. Die Sinterzeit wurde so gewählt, dass bei vorgegebener Temperatur eine Dichte des porösen Körpers oberhalb 85 % - 95 % zur theoretischen Dichte des dichten Materials erreicht wurde. Die Aufheizrate lag beim Erreichen der Solltemperatur bei wenigen Minuten, um ein Fließen zu verhindern. Die Formkörper wurden im heißen Zustand dem Ofen entnommen.

Zur Bestimmung des Schrumpfes/Vergrößerungsfaktors wurden poröse Körper vermessen, dicht gesintert und erneut vermessen. Mit dem so in drei Raumrichtungen definierten Sinterschrumpf wurden nach dem Anbringen von Halterungen mit Hilfe der Sirona inLab Kronen aus den porösen Körpern geschliffen. Diese wurde unter Vakuum bei einer Temperatur von 1165 °C dicht gesintert:
6 min. Vorheizen bei 600 °C, ehe die Restauration in den Ofen gefahren wurde
40 min. Aufheizen auf die Endtemperatur (1165 °C)
10 min. auf Maximaltemperatur gehalten
Während des Aufheizens und während des Sinterns lag ein Vakuum vor.

Der Ofen öffnete bei Maximaltemperatur und die Restauration kühlte an der Luft ab oder aber die Restauration wurde langsam im geschlossenen oder geringfügig geöffneten Ofen abgekühlt.

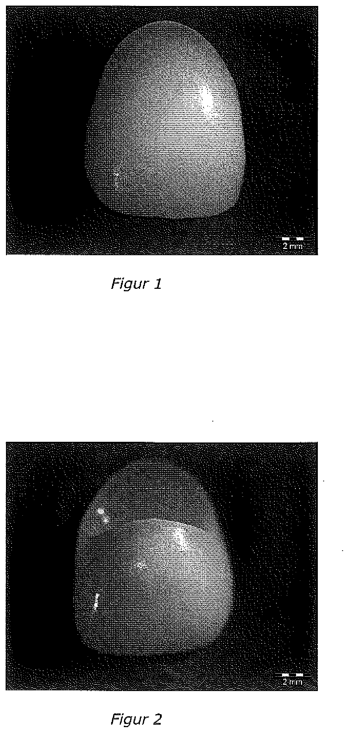

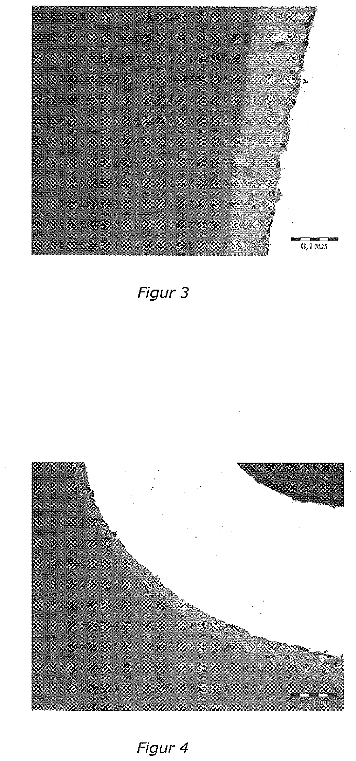

Die Figuren 1 und 2 zeigen Aufnahmen einer Krone, die aus einem porösen silikat-keramischen Körper hergestellt wurde. Figur 1 zeigt eine Krone hergestellt aus porösem Feldspatblock und dicht gesintert: Frontansicht. Figur 2 zeigt eine Krone hergestellt aus porösem Feldspatblock und dicht gesintert: Rückansicht. Figur 3 zeigt einen Ausschnitt des Verbundes einer NEM-Krone mit einer VM13-Verblendung aus einem Formkörper geschliffen. Die linke Seite der Aufnahme zeigt die dichte Verblendschale. Die Zwischenschicht ist der Opaker, der weiße Bereich rechts ist das NEM-Gerüst. Figur 4 zeigt einen Ausschnitt des Verbundes einer NEM-Krone mit einer VM13-Verblendung aus einem Formkörper geschliffen. Zu sehen ist in dem Anschliff die NEM-Krone (weiß), der aufliegende Opaker (hellgrau) und die dichte Verblendschale (dunkelgrau, links).

Es zeigte sich, dass bei Verwendung einer höheren Sintertemperatur bei gleicher Sinterzeit die Formkörperdichte so hoch wurde, dass bei vorgegebenen Schleifparametern keine Restauration geschliffen werden konnte. Es traten Ausbrüche auf und die CAD/CAM-Maschine brach teilweise die Schleifvorgänge aufgrund zu hoher Schleiferbeanspruchung ab.

Formkörper, die ohne Vakuum vorgesintert wurden, konnten nicht verwendet werden, da Einschlüsse in der Keramik zu einer Eintrübung derselben führte. Die Erniedrigung der Aufheizrate beim porös-Sintern führte zu einem Fließen der Körper, wodurch in den Körpern Bereiche mit unterschiedlicher Dichte entstanden. Somit war eine passgenaue Bearbeitung nicht möglich.

Aus den zuvor genannten Formkörpern wurden auch Verblendschalen für Zirkondioxidkäppchen hergestellt. Zu diesem Zweck wurden die dicht gesinterten Käppchen mittels eines handelsüblichen CAD/CAM-Systems eingescannt und eine vollanatomische Gestaltung der Verblendschale durchgeführt. Nach dem Ausschleifen der Verblendschale wurde diese auf das Zirkondioxidkäppchen aufgesintert. Dabei wurde das gleiche Sinterprogramm wie zum dicht Sintern einer Vollkrone verwendet (s.o.).

Beim Aufsintern ist es vorteilhaft, dass die Verblendschale bei der Positionierung im Ofen nicht verrutscht. Vorteilhaft ist hierbei eine entsprechende Gestaltung der Oberfläche des Keramikgerüstes und der Innenseite der Verblendschale. Besonders bereits in der Software implementierte Schleifgeometrien sind zu empfehlen.

Vorteilhafterweise sollten bei der Gestaltung der Gerüstkonstruktion keine oder nur sehr geringe "unter sich gehende" Stellen konstruiert werden. Der definierte Sinterschrumpf der Formkörper bzw. der geschliffenen porösen Konstruktionen ermöglicht keine bzw. nur eine sehr geringe zusätzliche Schrumpfung. Eine zusätzliche Schrumpfung würde nicht durch die poröse Struktur erreicht, sondern durch die Oberflächenspannung des Objektes und die natürliche Eigenschaft flüssiger und viskoser Körper, eine möglichst kleine Oberfläche zu erreichen. Dies kann aber zu Spannungen und Rissen führen, da der Formkörper unterschiedlich stark schrumpft.

Des Weiteren wurden poröse Formkörper, die zu Verblendschalen verarbeitet wurden, aus leuzitverstärkten, handelsüblichen Verblendkeramikpulvern (Vita VM9 und VM13 Verblendkeramiken) hergestellt. Dabei wurden die auf den jeweiligen WAK des Gerüstmaterials abgestimmten Verblendkeramikpulver über einfaches Pressen geformt. Wahlweise kann zur besseren Handhabung ein Binder oder andere Zusätze zur Formgebung verwendet werden.

Der WAK der Verblendkeramiken lag in einem Bereich zwischen 9 bis 13.

Zur Herstellung von Formkörpern mit WAK 9 wurde das Verblendkeramikpulver in Form gebracht und gesintert. Das Sintern erfolgte ohne Vorheizen und während des gesamten Sinterprozesses mit Vakuum. Die Blöcke wurden in einen 500 °C bis 600 °C vorgeheizten Ofen gegeben. Sie wurden in 10 min. auf eine Temperatur von 780 °C erhitzt und 5 min. bei dieser Maximaltemperatur gehalten. In der nachfolgenden Tabelle sind verschiedene Versuche mit den jeweiligen Eigenschaften aufgeführt:

| Maximaltemperatur [°C] | Bemerkungen |
|---|---|
| 700 | Block zu weich |
| 750 | Block noch verwendbar, aber nicht sehr fest |
| 780 | Block hat ideale Eigenschaften für das vorgegebene Schleifprogramm, keine Ausbrüche beim Schleifen |
| 800 | Block ist gut zu schleifen |

Es zeigte sich, dass die unter 750 °C gesinterten Formkörper zu weich waren. Mit steigender Temperatur verbesserten sich die Bearbeitungseigenschaften für die Sirona-Schleifmaschine.

Die geschliffenen Verblendkeramikschalen wurden auf Zirkondioxidkäppchen mit folgendem Sinterprogramm aufgebrannt:
- 6 min. bei 500 °C vorheizen
- mit 55 °C/min. auf 910 °C aufheizen
- 1 min. die Maximaltemperatur halten

Das verwendete Temperaturprogramm entspricht dem normalen Brennprogramm für diese Verblendkeramik.

Die Herstellung der Formkörper mit einem WAK von 13 beinhaltet ähnliche Schritte wie die Herstellung der zuvor genannten Formkörper. Das Verblendkeramikpulver wurde durch Pressen in Form gebracht. Anschließend wurden die Formkörper 6 min bei 600 °C vorgeheizt. Die Formkörper wurden in 15 min auf 730 °C erhitzt. Während des Aufheizens lag bereits ein Vakuum an. Die Maximaltemperatur wurde 2 min. gehalten. Der Formkörper wurde im Ofen abgekühlt, wobei die Tür nicht dicht abschloss, sondern einen Spalt geöffnet war. Das Vorsintern bei Temperaturen oberhalb 800 °C erwies sich als nicht sinnvoll, da die Dichten der so erhaltenen Formkörper für eine Bearbeitung bereits zu hoch waren.

Aus den so hergestellten Formkörpern wurden in einer handelsüblichen CAD/CAM-Schleifeinheit Verblendschalen geschliffen, die auf NEM-Käppchen aufgepasst wurden. Die NEM-Gerüste wurden vor dem Einscannen mit einem Opaker behandelt, um die dunkle Eigenfarbe des Metalls abzudecken. Das dicht Sintern erfolgte nach folgendem Brennprogramm:
- 6 min. vorheizen bei 500 °C
- mit 55 °C/min. auf 880 °C aufheizen
- 1 min. bei 880 °C aussintern
Die Restauration wurde langsam im Ofen abgekühlt.

Das verwendete Temperaturprogramm entspricht dem normalen Brennprogramm für diese Verblendkeramik.

In Figuren 3 und 4 sind Aufnahmen des Verbundes von NEM-Gerüst und Verblendkeramik zu sehen.

## Patentansprüche

1. Poröser silikat-keramischer Körper, gegebenenfalls mit unterschiedlicher Farbgebung, mit einer ersten Dichte, der zu einem silikat-keramischen Körper mit einer zweiten Dichte gesintert wird, wobei das Verhältnis der ersten Dichte zur zweiten Dichte 2/5 bis 98/100 und die Drei-Punkt-Biegefestigkeit des porösen silikat-keramischen Körpers mit einer ersten Dichte, gemessen nach ISO 6872:2008, 25 bis 180 MPa beträgt und wobei die zweite Dichte ungefähr der theoretisch erreichbaren Dichte des keramischen Körpers entspricht.

2. Poröser silikat-keramischer Körper nach Anspruch 1, wobei der Wärmeausdehnungskoeffizient (WAK) des Körpers auf die Verwendung als Verblendmaterial für ein Gerüst abgestimmt ist und gemessen nach ISO 6872:2008 mindestens 7 x 10⁻⁶ 1/K, insbesondere 7 bis 18 x 10⁻⁶ 1/K des Körpers beträgt.

3. Poröser silikat-keramischer Körper nach Anspruch 2, wobei der WAK des Körpers, gemessen nach ISO 6872:2008, zwischen 7 und 16 x 10⁻⁶ 1/K, insbesondere 12 bis 15 x 10⁻⁶ 1/K beträgt.

4. Poröser silikat-keramischer Körper nach Anspruch 2, wobei der WAK des Körpers gemessen nach ISO 6872:2008 zwischen 7 und 10 x 10⁻⁶ 1/K beträgt.

5. Poröser silikat-keramischer Körper nach mindestens einem der Ansprüche 1 bis 4 als Formkörper ausgebildet.

6. Poröser silikat-keramischer Körper nach Anspruch 5 mit einem Halteelement.

7. Poröser silikat-keramischer Körper nach Anspruch 5 als Einbettung in eine Matrix.

8. Dentalrestaurationsvorstufe erhältlich durch Bearbeitung eines porösen silikat-keramischen Körpers nach Anspruch 1 oder einem der Ansprüche 2 bis 7.

9. Dentalrestauration erhältlich durch Dichtsintern der Dentalrestaurationsvorstufe gemäß Anspruch 8, unter eventueller Berücksichtigung eines Sinterschrumpfes.

10. Dentalrestaurationsvorstufe erhältlich durch Bearbeitung des porösen silikat-keramischen Körpers nach mindestens einem der Ansprüche 1 bis 7 und Aufsetzen auf ein komplementäres Gerüst.

11. Dentalrestauration erhältlich durch dicht Sintern der Dentalrestaurationsvorstufe gemäß Anspruch 10, ggf. unter Berücksichtigung eines Sinterschrumpfes, auf ein komplementäres Gerüst.

12. Verwendung des porösen silikat-keramischen Körpers nach mindestens einem der Ansprüche 1 bis 7 in der Dentaltechnik.

13. Verfahren zur Herstellung einer Dentalrestauration umfassend die folgenden Schritte:
- Bearbeiten des porösen silikat-keramischen Körpers nach mindestens einem der Ansprüche 1 bis 7,
- Positionieren der Verblendschale auf einem Gerüst mit anschließendem Sinterbrand,
- dicht Sintern der Restaurationsvorstufe zur endgültigen dentalen Restauration,
- dicht Sintern der Verblendschale mit anschließendem Positionieren und Verbinden (Aufsintern, Kleben, Verwendung eines Glaslots) mit einem Gerüst.

## Claims

1. A porous silicate-ceramic body, optionally with different colors, having a first density that can be sintered to a silicate-ceramic body having a second density, wherein the ratio of the first density to the second density is from 2/5 to 98/100, and the three-point bending strength of said porous silicate-ceramic body having a first density as measured according to ISO 6872:2008 is from 25 to 180 MPa, and wherein the second density approximately corresponds to the theoretically reachable density of the ceramic body.

2. The porous silicate-ceramic body according to claim 1, wherein the coefficient of thermal expansion (CTE) of the body is adjusted for use as a veneer material for a scaffold and, as measured according to ISO 6872:2008, is at least 7 x 10⁻⁶ K⁻¹, especially from 7 to 18 x 10⁻⁶ K⁻¹.

3. The porous silicate-ceramic body according to claim 2, wherein the CTE of the body as measured according to ISO 6872:2008 is from 7 to 16 x 10⁻⁶ K⁻¹, especially from 12 to 15 x 10⁻⁶ K⁻¹.

4. The porous silicate-ceramic body according to claim 2, wherein the CTE of the body as measured according to ISO 6872:2008 is from 7 to 10 x 10⁻⁶ K⁻¹.

5. The porous silicate-ceramic body according to at least one of claims 1 to 4, designed as a molded member.

6. The porous silicate-ceramic body according to claim 5, comprising a holding element.

7. The porous silicate-ceramic body according to claim 5, embedded in a matrix.

8. A dental restoration precursor obtainable by processing a porous silicate-ceramic body according to claim 1 or any of claims 2 to 7.

9. A dental restoration obtainable by dense-sintering the dental restoration precursor according to claim 8, a sintering shrinkage being taken into account if necessary.

10. A dental restoration precursor obtainable by processing the porous silicate-ceramic body according to at least one of claims 1 to 7 and applying it to a complementary scaffold.

11. A dental restoration obtainable by dense-sintering the dental restoration precursor according to claim 10, a sintering shrinkage being taken into account if necessary, onto a complementary scaffold.

12. Use of the porous silicate-ceramic body according to at least one of claims 1 to 7 in dental technology.

13. A process for preparing a dental restoration, comprising the steps of:
- processing the porous silicate-ceramic body according to at least one of claims 1 to 7,
- positioning the veneer on a scaffold and subjecting it to sinter firing;
- dense-sintering the restoration precursor into the final dental restoration;
- dense-sintering the veneer followed by positioning and bonding (by sintering, adhesive bonding, using a glass solder) to a scaffold.

## Revendications

1. Corps en céramique à base de silicate poreux, éventuellement avec différentes couleurs et ayant une première densité, qui est fritté pour former un corps en céramique à base de silicate ayant une seconde densité, dans lequel le rapport de la première densité à la seconde densité est compris entre 2/5 et 98/100, et la résistance à la flexion en trois points dudit corps en céramique à base de silicate poreux ayant une première densité, mesurée selon ISO 6872:2008, est de 25 à 180 MPa, et dans lequel la seconde densité approximativement correspond à la densité du corps en céramique pouvant être atteinte théoriquement.

2. Corps en céramique à base de silicate poreux selon la revendication 1, dans lequel le coefficient de dilatation thermique (CDT) du corps s'accorde à l'utilisation comme matériau de facette pour une infrastructure et est au moins 7 x 10⁻⁶ 1/K, notamment 7 à 18 x 10⁻⁶ 1/K, du corps, mesuré selon ISO 6872:2008.

3. Corps en céramique à base de silicate poreux selon la revendication 2, dans lequel le CDT du corps est compris entre 7 et 16 x 10⁻⁶ 1/K, notamment 12 à 15 x 10⁻⁶ 1/K, mesuré selon ISO 6872:2008.

4. Corps en céramique à base de silicate poreux selon la revendication 2, dans lequel le CDT du corps est compris entre 7 et 10 x 10⁻⁶ 1/K, mesuré selon ISO 6872:2008.

5. Corps en céramique à base de silicate poreux selon l'une au moins des revendications 1 à 4, formé comme pièce moulée.

6. Corps en céramique à base de silicate poreux selon la revendication 5, comprenant un élément de support.

7. Corps en céramique à base de silicate poreux selon la revendication 5, enrobé dans une matrice.

8. Précurseur d'une restauration dentaire, pouvant être obtenu par le traitement d'un corps en céramique à base de silicate poreux selon la revendication 1 ou l'une des revendications 2 à 7.

9. Restauration dentaire pouvant être obtenu par le frittage à densité maximale du précurseur de restauration dentaire selon la revendication 8, éventuellement tenant compte du retrait dû au frittage.

10. Précurseur d'une restauration dentaire, pouvant être obtenu par le traitement d'un corps en céramique à base de silicate poreux selon l'une au moins des revendications 1 à 7 et son installation sur une infrastructure complémentaire.

11. Restauration dentaire pouvant être obtenu par le frittage à densité maximale du précurseur de restauration dentaire selon la revendication 10, éventuellement tenant compte du retrait dû au frittage, sur une infrastructure complémentaire.

12. Utilisation du corps en céramique à base de silicate poreux selon l'une au moins des revendications 1 à 7 dans la technologie dentaire.

13. Procédé pour préparer une restauration dentaire, comprenant les étapes consistant à :
- traiter le corps en céramique à base de silicate poreux selon l'une au moins des revendications 1 à 7,
- placer la facette sur une infrastructure, avec cuisson de frittage consécutive,
- fritter à densité maximale le précurseur de restauration pour former la restauration dentaire finale,
- fritter à densité maximale la facette avec le placement et la liaison (frittage, collage, utilisation d'une brasure en verre) avec une infrastructure, consécutifs.
